(19) Europäisches Patentamt / European Patent Office / Office européen des brevets

(11) **EP 4 238 422 A1**

(12) **EUROPEAN PATENT APPLICATION**
published in accordance with Art. 153(4) EPC

(43) Date of publication:
**06.09.2023 Bulletin 2023/36**

(21) Application number: **21886359.5**

(22) Date of filing: **28.10.2021**

(51) International Patent Classification (IPC):
***A23J 3/34*** *(2006.01)*

(52) Cooperative Patent Classification (CPC):
**A23J 3/34**

(86) International application number:
**PCT/JP2021/039923**

(87) International publication number:
**WO 2022/092242 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.10.2020 CN 202011187188**

(71) Applicants:
 • **Amano Enzyme Inc.**
 **Nagoya-shi**
 **Aichi 460-8630 (JP)**

 • **Amano Enzyme Manufacturing (China), Ltd.**
 **Suqian City, Jiangsu Province, 223700 (CN)**

(72) Inventors:
 • **WANG, Panhui**
 **Wuxi, Jiangsu 214122 (CN)**
 • **ZHAO, Shaohui**
 **Wuxi, Jiangsu 214122 (CN)**

(74) Representative: **Müller-Boré & Partner**
 **Patentanwälte PartG mbB**
 **Friedenheimer Brücke 21**
 **80639 München (DE)**

(54) **METHOD FOR MANUFACTURING PROCESSED ARTICLE OF VEGETABLE PROTEIN FOOD/BEVERAGE PRODUCT IN WHICH AROMA IS ENHANCED**

(57)　The purpose of the present invention is to provide a processing technique with which it is possible to enhance the aroma of a plant protein food/beverage product ingredient and/or of a plant protein food/beverage product. By using a method for manufacturing a processed article of a plant protein food/beverage product ingredient and/or of a plant protein food/beverage product, the method including a step for treating a plant protein food/beverage product ingredient and/or a plant protein food/beverage product with a protein deamidation enzyme and a β-amylase, it is possible to enhance the raw-ingredient-derived aroma of the resultant processed article of the plant protein food/beverage product ingredient and/or of the plant protein food/beverage product.

EP 4 238 422 A1

**Description**

TECHNICAL FIELD

The present invention relates to a production method for a processed product of a plant protein food and drink material and/or a plant protein food and drink. More specifically, the present invention relates to a processing technique of enhancing the aroma of a plant protein food and drink material and/or a plant protein food and drink.

BACKGROUND ART

Beverages rich in nutrients such as proteins have been widely familiar to people since nutrients can be easily taken. On the other hand, on the basis of an increase in the number of vegetarian people, allergic problems, religious reasons, and the like in recent years, soy milk using soybeans rich in a plant protein as a raw material has been widely spread as an alternative to animal milk typified by cow milk.

Regarding a soybean protein, various modification treatments have been studied for the purpose of improving existing characteristics thereof, providing food products having new preference characteristics, and the like.

For example, Patent Document 1 (JP 2000-50887 A) describes that the yield of soybean protein from soybean powder is improved by subjecting the soybean powder to a protein deamidase treatment. Patent Document 2 (JP 2008-283900 A) describes that a polyglycerol fatty acid ester containing a fatty acid having 12 to 22 carbon atoms as a main constituent fatty acid is effective as a dispersion stabilizer for soy milk. Patent Document 3 (JP 2015-159765 A) describes that by subjecting soy milk to a deamidation treatment with a cation exchange resin and/or a phytic acid removal treatment with an anion exchange resin, precipitation hardly occurs with respect to a coagulant.

On the other hand, from the viewpoint of coping with further diversification of preference and the like, further options other than soy milk are required for food and beverages containing plant proteins, and milk using plant materials other than soybeans as raw materials (plant milk) has been developed.

Among plant milk, oat milk has a characteristic different from other grain milk in that the oat milk is rich in lipids, β-glucans, and minerals in addition to proteins, and a high nutritional value of the oat milk has attracted attention. For example, Patent Document 4 (US 6,451,361 B1) describes that by treating an oat suspension with an α amylase and a β amylase, the problem of high viscosity is solved, and an oat dispersion in which a protein and a β glucan are maintained is obtained. Patent Document 5 (CN 101991163 A) describes that maltooligosaccharide is produced by a treatment using an α amylase, a β amylase, and a transglucosidase to improve the prebiotic action of an oat beverage.

SUMMARY OF THE INVENTION

PROBLEMS TO BE SOLVED BY THE INVENTION

Oat milk has high nutritional value and has high value as a health food. Oat milk is generally considered to be easy to drink among plant milk. On the other hand, it can be said that oat milk lacks individuality because it does not particularly have aroma. Techniques for improving the aroma have not been sufficiently studied not only in oat milk but also in various plant protein foods and drinks and materials thereof, regardless of the strength of the aroma. In view of the possibility of spread and expansion of the plant protein food and drink and the material thereof in the future, a technique capable of imparting or emphasizing individuality by enhancing the aroma of the plant protein food and drink and the material thereof is desired in order to cope with diversification of consumers' taste preferences.

An object of the present invention is to provide a processing technique capable of enhancing the aroma of a plant protein food and drink and a material thereof.

MEANS FOR SOLVING THE PROBLEM

The present inventors have conducted intensive studies, and as a result, have found that the aroma of a plant protein food and drink and a material thereof can be enhanced by treating the plant protein food and drink and the material thereof with a protein deamidase and a β-amylase. That is, the present invention provides inventions of the following aspects.

Item 1. A production method for a processed product of a plant protein food and drink material and/or a plant protein food and drink, the production method including a step of treating a plant protein food and drink material and/or a plant protein food and drink with a protein deamidase and a β-amylase.

Item 2. The production method described in item 1, in which the plant protein food and drink material and/or the plant protein food and drink is oat milk.

Item 3. The production method described in item 1, in which the protein deamidase is used in an amount of 0.05 U or more per 1 g of a plant protein.

Item 4. The production method described in any one of items 1 to 3, in which the β-amylase is used in an amount of 0.01 U or more per 1 g of a plant protein raw material.

Item 5. The production method described in any one of items 1 to 4, in which the β-amylase is used in an amount of 0.001 U or more per 1 U of the protein deamidase.

Item 6. The production method described in any one of items 1 to 5, further including a step of preparing the plant protein food and drink material and/or the plant protein food and drink using 0.5 parts by weight or more of water per 1 part by weight of a plant protein raw material.

Item 7. The production method described in any one of items 1 to 6, in which an α-amylase is used in combination with the protein deamidase and the β-amylase.

Item 8. An aroma enhancer for a plant protein food and drink material and/or a plant protein food and drink, the aroma enhancer containing a protein deamidase and a β-amylase.

ADVANTAGES OF THE INVENTION

According to the present invention, there is provided a processing technique capable of enhancing the aroma of a plant protein food and drink and a material thereof.

EMBODIMENTS OF THE INVENTION

1. Production Method for Processed Product of Plant Protein Food and Drink Material and/or Plant Protein Food and Drink

A production method for a processed product of a plant protein food and drink material and/or a plant protein food and drink of the present invention includes a step of treating a plant protein food and drink material and/or a plant protein food and drink with a protein deamidase and a β-amylase. The production method for a processed product of a plant protein food and drink material and/or a plant protein food and drink of the present invention may further include a step of preparing the plant protein food and drink material and/or the plant protein food and drink using 0.5 parts by weight or more of water per 1 part by weight of a plant protein raw material. Hereinafter, the production method for a processed product of a plant protein food and drink material and/or a plant protein food and drink of the present invention will be described in detail.

1-1. Plant Protein Food and Drink Material and/or Plant Protein Food and Drink

The plant protein food and drink material and/or the plant protein food and drink used in the present invention is not particularly limited. The plant protein food and drink material refers to a food and drink material which contains a plant protein, is not directly eaten and/or drunk, but is premised on cooking, and is used as a food and drink material. The plant protein food and drink refers to a food and drink which is directly eaten and/or drunk. Specific examples of the plant protein food and drink material and/or the plant protein food and drink (hereinafter, these are collectively referred to as "plant protein food and drink material and the like") include plant milk, plant cream, plant substitute meat, plant substitute cheese, and a plant protein solution. Among these plant protein food and drink material and the like, from the viewpoint of further improving the effect of the present invention, those having fluidity such as plant milk, plant cream, and a plant protein solution are preferable, and plant milk is more preferable.

A plant edible part to be a raw material of the plant protein (hereinafter, described as "plant protein raw material") contained in the plant protein food and drink material and the like is not particularly limited, and examples thereof include cereals such as wheat and barley, rice, and beans, and nuts. Among these plants, from the viewpoint of further improving the effect of the present invention, cereals are preferable, wheat and barley are more preferable, and oat is further preferable.

A specific method for preparing the plant protein food and drink material and the like using a plant protein raw material can be appropriately determined by those skilled in the art. For example, the amount of water per 1 part by weight of the plant protein raw material used for preparation of the plant protein food and drink material and the like is, for example, 0.5 parts by weight or more. Since the present invention is excellent in the aroma-enhancing effect of the plant protein food and drink material and the like, even in the case of a plant protein food and drink material and the like prepared using a larger amount of water, which originally reduce or lose the aroma, it is possible to effectively exhibit the aroma-enhancing effect. From such a viewpoint, a suitable example of the amount of water with respect to 1 part by weight of the plant protein raw material is, for example, 1 part by weight or more, preferably 2 parts by weight or more, more preferably 3 parts by weight or more, further preferably 4 parts by weight or more, still more preferably 4.5 parts by weight or more, even more preferably 4.8 parts by weight or more, and particularly preferably 5 parts by weight or more.

The upper limit of the range of the amount of water per 1 part by weight of the plant protein raw material used for preparation of the plant protein food and drink material and the like is not particularly limited, and is, for example, 20 parts by weight or less, and from the viewpoint of further improving the aroma-enhancing effect, the upper limit thereof is preferably 10 parts by weight or less, more preferably 8 parts by weight or less, further preferably 6 parts by weight or less, still more preferably 5.5 parts by weight or less, and even more preferably 5.2 parts by weight or less.

In the present invention, oat milk can be used as a particularly preferable example of the plant protein food and drink material and the like. Examples of the oat milk include liquid materials obtained by filtering a heat-treated oat slurry (for example, porridge of oat powder, a crushed product of oatmeal porridge, and the like).

The amount of water per 1 part by weight of oat used for preparation of the oat milk (that is, the amount of water with respect to 1 part by weight of oat in the heat-treated oat slurry) is, for example, 0.5 parts by weight or more, 1 part by weight or more, or 2 parts by weight or more. Since the present invention is excellent in the aroma-enhancing effect of the oat milk, even in the case of oat milk prepared using a larger amount of water with respect to oat, it is possible to effectively enhance the aroma. From such a viewpoint, a suitable example of the amount of water with respect to 1 part by weight of oat is, for example, 3 parts by weight or more, preferably 4 parts by weight or more, more preferably 4.5 parts by weight or more, further preferably 4.8 parts by weight or more, and still more preferably 5 parts by weight or more.

The upper limit of the range of the amount of water per 1 part by weight of oat used for preparation of the oat milk is not particularly limited, and is, for example, 20 weights or less, and from the viewpoint of further improving the aroma-enhancing effect, the upper limit thereof is preferably 10 parts by weight or less, more preferably 8 parts by weight or less, further preferably 6 parts by weight or less, still more preferably 5.5 parts by weight or less, and even more preferably 5.2 parts by weight or less.

The temperature of the heating treatment of the oat slurry is, for example, 83 to 100°C, preferably 85 to 96°C, and more preferably 88 to 93°C. The number of meshes of a sieve used for filtering the heat-treated oat slurry may be such a degree that coarse insoluble fibers of oat are removed, and is, for example, 50 to 70 mesh and preferably 55 to 65 mesh.

1-2. Protein Deamidase

The type, origin, and the like of the protein deamidase used in the present invention are not particularly limited as long as the protein deamidase is an enzyme that exhibits an action of decomposing an amide group-containing side chain of a protein without cleaving peptide bonds and crosslinking the protein. Examples of the protein deamidase include commercially available products of a protein deamidase derived from the genus Chryseobacterium, Flavobacterium, Empedobacter, Sphingobacterium, Aureobacterium, or Myroides, and a protein glutaminase derived from the genus Chryseobacterium, which are disclosed in JP 2000-50887 A, JP 2001-218590 A, and WO 2006/075772 A1. These protein deamidases may be used singly or in combination of a plurality of kinds thereof.

Among these protein deamidases, from the viewpoint of further enhancing the aroma-enhancing effect of the plant protein food and drink material and the like, a protein deamidase derived from the genus Chryseobacterium is preferable, a protein glutaminase derived from the genus Chryseobacterium is more preferable, and a protein glutaminase derived from Chryseobacterium proteolyticum is further preferable.

The protein deamidase can be prepared from a culture solution of a microorganism from which the protein deamidase is derived. Specific examples of the preparation method include a method of recovering a protein deamidase from a culture solution or a bacterial cell of the above-mentioned microorganism. For example, in the case of using a microorganism that secretes protein deamidase, an enzyme can be separated and/or purified after recovering bacterial cells from the culture solution in advance by filtration, a centrifugal treatment, or the like, as necessary. In the case of using a microorganism that does not secrete protein deamidase, an enzyme can be separated and/or purified after recovering bacterial cells from the culture solution in advance as necessary and then disrupting the bacterial cells by a pressurization treatment, an ultrasonic treatment, or the like to expose an enzyme. As an enzyme separation and/or purification method, a known protein separation and/or purification method can be used without particular limitation, and examples thereof include a centrifugal separation method, a UF concentration method, a salting-out method, and various chromatography methods using an ion-exchange resin or the like. The separated and/or purified enzyme can be powdered by a drying method such as freeze-drying or reduced-pressure drying and prepared as an enzymatic agent, and can also be powdered using an appropriate excipient and/or drying aid in the drying method.

As the protein deamidase, a commercially available enzymatic agent can also be used, and examples of a preferred commercially available product include a protein glutaminase "Amano" 500 manufactured by Amano Enzyme Inc.

The titer of the enzymatic agent containing the protein deamidase used in the present invention is not particularly limited, and is, for example, 10 to 50000 U, preferably 100 to 10000 U, more preferably 200 to 800 U/g, further preferably 300 to 700 U/g, still more preferably 400 to 600 U/g, and even more preferably 450 to 550 U/g.

The used amount of the protein deamidase is not particularly limited, but the used amount of the protein deamidase per 1 g of the plant protein in the plant protein food and drink material and the like is, for example, 0.05 U or more, and from the viewpoint of further enhancing the aroma-enhancing effect of the plant protein food and drink material and the like, the used amount thereof is preferably 0.1 U or more, more preferably 0.2 U or more, further preferably 0.3 U or more, still more preferably 0.5 U or more, even more preferably 1.0 U or more, further more preferably 1.5 U or more, and particularly preferably 2.0 U or more. The upper limit of the used amount range of the protein deamidase per 1 g of the plant protein is not particularly limited, and is, for example, 25 U or less, 22 U or less, 17 U or less, 14 U or less, 10 U or less, 8 U or less, or 6 U or less.

The used amount of the protein amidase per 1 g of the plant protein raw material used in the plant protein food and drink material and the like is, for example, 0.006 U or more, and from the viewpoint of further enhancing the aroma-enhancing effect of the plant protein food and drink material and the like, the used amount thereof is preferably 0.012 U or more, more preferably 0.024 U or more, further preferably 0.036 U or more, still more preferably 0.06 U or more, even more preferably 0.12 U or more, further more preferably 0.18 U or more, and particularly preferably 0.24 U or more. The upper limit of the used amount range of the protein deamidase per 1 g of the plant protein raw material is not particularly limited, and is, for example, 3 U or less, 2.6 U or less, 2 U or less, 1.7 U or less, 1.2 U or less, 1 U or less, or 0.7 U or less.

In particular, when the plant protein food and drink material and the like are oat milk, the used amount of the protein deamidase per 1 g of the oat protein in the oat milk is, for example, 0.5 U or more. From the viewpoint of further enhancing the aroma-enhancing effect of the oat milk, the used amount of the protein deamidase is preferably 1.5 U or more, more preferably 2 U or more, further preferably 2.5 U or more, still more preferably 3 U or more, even more preferably 4 U or more, and particularly preferably 4.5 U or more. The upper limit of the used amount range of the protein deamidase per 1 g of the oat protein is not particularly limited, and is, for example, 25 U or less, 22 U or less, 17 U or less, 14 U or less, 10 U or less, 8 U or less, or 6 U or less.

When the plant protein food and drink material and the like are oat milk, the used amount of the protein deamidase per 1 g of oat used in the oat milk is, for example, 0.06 U or more, and from the viewpoint of further enhancing the aroma-enhancing effect of the oat milk, the used amount thereof is preferably 0.18 U or more, more preferably 0.24 U or more, further preferably 0.3 U or more, still more preferably 0.36 U or more, even more preferably 0.48 U or more, and particularly preferably 0.54 U or more. The upper limit of the used amount range of the protein deamidase per 1 g of oat is not particularly limited, and is, for example, 3 U or less, 2.6 or less, 2 U or less, 1.7 U or less, 1.2 U or less, 1 U or less, or 0.7 U or less.

For the activity of the protein deamidase, benzyloxycarbonyl-L-glutaminylglycine (Z-Gln-Gly) is used as a substrate, and the amount of enzyme that liberates 1 μmol of ammonia per minute is defined as 1 unit (1 U).

1-3. β-Amylase

The type, origin, and the like of the β-amylase used in the present invention are not particularly limited as long as the β-amylase is an exoenzyme that sequentially decomposes α-1,4 glycosidic bonds in maltose units from the non-reducing end of starch.

For example, specific examples of the β-amylase include a β amylase derived from plant such as wheat, barley, and soybean, and a β-amylase derived from microorganisms such as microorganisms of the genus Bacillus [for example, Bacillus flexus, Bacillus megaterium, Bacillus polymyxa, Bacillus circulans, and the like]; the genus Streptomyces sp.; and the genus Pseudomonas sp. These β-amylases may be used singly or in combination of a plurality of kinds thereof.

Among these β-amylases, from the viewpoint of further enhancing the aroma-enhancing effect of the plant protein food and drink material and the like, a β amylases derived from microorganisms is preferable, a β-amylase derived from the genus Bacillus is more preferable, and a β-amylase derived from Bacillus flexus is further preferable.

The β-amylase can be prepared from a culture solution of plant cells or microorganisms from which the β-amylase is derived. The specific preparation method is the same as the method for preparing the protein deamidase described above.

As the β-amylase, a commercially available enzymatic agent can also be used, and examples of a preferred commercially available product include a β-amylase F "Amano" manufactured by Amano Enzyme Inc.

The used amount of the β-amylase is not particularly limited, but the used amount of the β-amylase per 1 g of the plant protein raw material used in the plant protein food and drink material and the like is, for example, 0.01 U or more, and from the viewpoint of further enhancing the aroma-enhancing effect of the plant protein food and drink material and the like, the used amount thereof is preferably 0.02 U or more, more preferably 0.05 U or more, further preferably 0.1 U or more, still more preferably 0.2 U or more, and particularly preferably 0.3 U or more. The upper limit of the used amount range of the β-amylase per 1 g of the plant protein raw material is not particularly limited, and is, for example, 10 U or less or 3 U or less.

When the plant protein food and drink material and the like are oat milk, the used amount of the β-amylase per 1 g of oat used in the oat milk is, for example, 0.01 U or more, and from the viewpoint of further enhancing the aroma-enhancing effect of the oat milk, the used amount thereof is preferably 0.02 U or more, more preferably 0.05 U or more, further preferably 0.1 U or more, still more preferably 0.2 U or more, and particularly preferably 0.3 U or more. The upper limit of the used amount range of the β-amylase per 1 g of oat is not particularly limited, and is, for example, 10 U or less, 3 U or less, 1 U or less, or 0.5 U or less.

The ratio of the used amount of the protein amidase and the used amount of the β-amylase is determined depending on the used amount of each enzyme, and from the viewpoint of further enhancing the aroma-enhancing effect of the plant protein food and drink material and the like, the amount of the β-amylase per 1 U of the protein amidase is, for example, 0.028 U or more, preferably 0.14 U or more, more preferably 0.28 U or more, and further preferably 0.5 U or more. The upper limit of the used amount ratio range of the β-amylase per 1 U of the protein deamidase is not particularly limited, and is, for example, 5000 U or less or 500 U or less.

When the plant protein food and drink material and the like are oat milk, from the viewpoint of further enhancing the aroma-enhancing effect of the oat milk, the amount of β-amylase per 1 U of the protein amidase is preferably 0.14 U or more, more preferably 0.28 U or more, and further preferably 0.5 U or more. When the plant protein food and drink material and the like are oat milk, the upper limit of the amount of the β-amylase per 1 U of the protein deamidase is not particularly limited, and is, for example, 5000 U or less, 500 U or less, 200 U or less, 20 U or less, 10 U or less, 5 U or less, 3 U or less, or 1 U or less.

For the activity of the β-amylase, potato starch is used as a substrate, and the amount of enzyme that increases the reducing power corresponding to 1 mg of glucose per minute is defined as 1 unit (1 U).

1-4. α-Amylase

In the present invention, it is preferable that in the step of treating a plant protein food and drink material and the like with a protein deamidase and a β-amylase, an α-amylase is used in combination with the protein deamidase and the β-amylase.

The origin of the α-amylase is not particularly limited, and examples thereof include α amylases derived from the genus Aspergillus such as Aspergillus oryzae and Aspergillus niger; and the genus Bacillus such as Bacillus amyloliquefaciens, Bacillus subtilis, and Bacillus licheniformis, an α-amylase derived from the genus Bacillus is preferable, and an α-amylase derived from Bacillus amyloliquefaciens species is more preferable.

The used amount of the α-amylase per 1 g of the plant protein raw material is, for example, 0.5 to 50 U, preferably 0.8 to 10 U, more preferably 1 to 5 U, and further preferably 1.2 to 1.5 U.

For the activity of the α-amylase, soluble starch is used as a substrate, and the amount of enzyme that increases the reducing power corresponding to 10 mg of glucose per 30 minutes is defined as 1 unit (1 U).

1-5. Reaction Conditions, etc.

In the step of treating a plant protein food and drink material and the like with a protein deamidase and a β-amylase, a protein deamidase, a β-amylase, and as necessary, α amylase together with these enzymes are added to the plant protein food and drink material and the like to prepare a composition of the plant protein food and drink material and the like containing the plant protein food and drink material and the like, the protein deamidase, and the β-amylase, or containing the plant protein food and drink material and the like, the protein deamidase, the β-amylase, and the α-amylase, and the composition of the plant protein food and drink material and the like is maintained in a heated state, so that the enzyme treatment reaction can be caused to proceed.

The heating temperature (enzyme treatment reaction temperature) of the composition of the plant protein food and drink material and the like is not particularly limited, and can be appropriately determined by those skilled in the art according to the optimal temperature of the enzyme to be used and/or thermal characteristics of the plant protein food and drink material and the like, etc., but is, for example, 40 to 70°C, preferably 50 to 70°C, more preferably 55 to 65°C, and further preferably 58 to 62°C.

The enzyme treatment reaction time of the composition of the plant protein food and drink material and the like is not particularly limited, and may be appropriately determined according to the preparation scale of the composition, but is, for example, 0.5 hours or longer and preferably 1 hour or longer. The upper limit of the range of the enzyme treatment reaction time is not particularly limited, and is, for example, 24 hours or shorter, 12 hours or shorter, 8 hours or shorter, or 6 hours or shorter.

The enzyme treatment reaction can be terminated by an enzyme deactivation treatment with high heat. The enzyme deactivation treatment temperature is, for example, 85°C or higher and preferably 90°C or higher, and the enzyme deactivation treatment time is, for example, 5 to 25 minutes and preferably 10 to 20 minutes.

The composition of the plant protein food and drink material and the like after the end of the enzyme treatment is subjected to a post-treatment such as filtration as necessary to obtain a processed product of the plant protein food and drink material and the like. The processed product of the plant protein food and drink material and the like can be obtained as a plant protein food and drink material and the like with enhanced aroma as compared with a plant protein food and drink material and the like before the enzyme treatment. In particular, when the plant protein food and drink material and the like are oat milk, an oat milk processed product can be obtained as oat milk with enhanced aroma derived from oat as a raw material.

2. Use Application of Enzymatic Agent Containing Protein Deamidase and β-Amylase

As described above, the combination of the protein deamidase and the β-amylase can enhance the aroma of the plant protein food and drink material and the like. Therefore, the present invention also provides an aroma enhancer for a plant protein food and drink material and the like, the aroma enhancer containing a protein deamidase and a β-amylase. In the present invention, enhancement of the aroma of the plant protein food and drink material and the like means that a feeling in which the aroma derived from the plant protein raw material as a raw material (a plant edible part used as a raw material of the plant protein food and drink material and the like) is further strongly felt.

The type, used amount, and the like of the component to be used in the aroma enhancer are as described in the section of "1. Production Method for Processed Product of Plant Protein Food and Drink Material and/or Plant Protein Food and Drink".

EXAMPLES

Hereinafter, the present invention will be specifically described by means of Examples; however, the present invention is not to be construed as being limited to the following Examples.

Used Enzyme

Details of enzymes used in the following test examples are as follows.

[Table 1]

| Enzyme type | Abbreviation | Trade name | Origin |
| --- | --- | --- | --- |
| Protein glutaminase | PG | Protein-glutaminase | Chryseobacterium proteolyticum |
| α-Amylase | E5NC | Kleistase E5NC | Bacillus amyloliquefaciens |
| α-Amylase | BZ-LC | Biozyme LC | Aspergillus oryzae |
| Hemicellulase | HC90 | Hemicellulase 90 | Aspergillus niger |
| Maltotriosyl transferase | GLT | glycotransferrase | Aeribacillus |
| β-Amylase | BAF | β-Amylase F | Bacillus flexus |

The activity of the protein deamidase (protein glutaminase) was measured by the following method.

(1) To 1 ml of a 0.2 M phosphate buffer (pH 6.5) containing 30 mM Z-Gln-Gly, 0.1 ml of an aqueous solution containing a protein deamidase was added, the mixture was incubated at 37°C for 10 minutes, and then 1 ml of a 0.4 M TCA solution was added to stop the reaction. As a blank, to 1 ml of a 0.2 M phosphate buffer (pH 6.5) containing 30 mM Z-Gln-Gly, 1 ml of a 0.4 M TCA solution was added, 0.1 ml of an aqueous solution (enzyme solution) containing a protein deamidase was further added, and the mixture was incubated at 37°C for 10 minutes.
(2) The amount of ammonia generated in the reaction solution was measured for the solution obtained in (1) using Ammonia Test Wako (Wako Pure Chemical Industries, Ltd.). The ammonia concentration in the reaction solution was determined from a calibration curve representing the relationship between the ammonia concentration and the absorbance (630 nm) prepared using an ammonia standard solution (ammonium chloride).
(3) The activity of the protein deamidase was calculated from the following formula with the amount of enzyme that produces 1 μmol of ammonia per minute being defined as 1 unit (1 U). In the formula, the reaction solution amount is 2.1, the enzyme solution amount is 0.1, and Df is a dilution rate of the enzyme solution. 17.03 is a molecular weight of ammonia.

[Mathematical Formula 1]

Enzyme activity (U/mL)
= Ammonia concentration in reaction solution (mg/L) × (1/17.03)
× (reaction solution amount/enzyme solution amount) × (1/10) × Df

The activity of the β-amylase was measured by the following method.

(1) A potato starch was used as a substrate, the potato starch was previously dried at 105°C for 2 hours, 1.0 g of the dried product thereof was weighed, 20 mL of water was added, and 5 mL of a sodium hydroxide test solution (2 mol/L) was gradually added while stirring to form a paste. Next, the paste was heated in a water bath for 3 minutes with stirring, and then 25 mL of water was added. After cooling, the mixture was neutralized by adding a hydrochloric acid test solution (2 mol/L) and a hydrochloric acid test solution (0.1 mol/L), 10 mL of a 1 mol/L acetic acid-sodium acetate buffer solution (pH 5.0) was added, and water was further added to make 100 mL, thereby obtaining a substrate solution.

(2) 10 mL of the substrate solution was weighed and warmed at 37°C for 10 minutes, 1 mL of a sample solution was added and immediately shaken, the mixture was warmed at the same temperature for 10 minutes or 30 minutes, 4 mL of a Fehling's solution was added and shaken lightly, the mixture was heated in a water bath for 15 minutes, and then cooled to 25°C or lower, and 2 mL of a potassium iodide solution (for a β-amylase-invertase activity test) and 2 mL of sulfuric acid (1 → 6) were added, thereby obtaining a test solution. Separately, the same operation as in the preparation of the test solution was performed using 10 mL of water instead of the substrate solution to prepare a comparative solution. For the test solution and the comparative solution, liberated iodine was titrated with a 0.05 mol/L sodium thiosulfate solution. The end point was set to a time at which 1 to 2 drops of a soluble starch test solution were added when the titration was close to the end point, and the resulting blue color disappeared.

(3) The amount of enzyme that leads to an increase in reducing power corresponding to 1 mg of glucose per minute was defined as 1 unit (1 U), and the activity of the β-amylase was calculated by the following formula.

[Mathematical Formula 2]

β-Amylase activity (U/g, U/mL) = Amount of glucose (mg) × 1/10 × 1/M
Amount of glucose (mg) = (b − a ) × 1.6 × f

a: Titration value (mL) of enzyme reaction solution
b: Titration value (mL) of blank solution 1.6: 1 mL of 0.05 mol/L sodium thiosulfate solution corresponds to 1.6 mg of glucose amount
1/10: Unit conversion factor of reaction time (min)
M: Amount (g or mL) of sample in 1 mL of sample solution
f: Factor of 0.05 mol/L sodium thiosulfate solution (for titration)

Test Example

(1) Preparation of Oat Milk

To 300 g of oat, 1200 ml of hot water (80°C) was added, and the mixture was treated for 30 minutes with a colloid mill to obtain an oat slurry. Hot water was added to the oat slurry to give a volume of 1800 g (the total amount of water with respect to 1 part by weight of oat was 5 parts by weight), and the mixture was heated at 90°C for 15 minutes. Thereafter, coarse fibers were removed through a 60-mesh sieve and cooled to 60°C, thereby preparing oat milk. The prepared oat milk was parceled out under stirring.

(2) Enzyme Treatment

The enzymes shown in Table 2 were charged in the indicated amounts, and reacted at 60°C for 3 hours. After performing an enzyme deactivation treatment at 90°C for 15 minutes, the mixture was stirred and filtered through a sieve (100 mesh) to obtain processed oat milk.

(3) Evaluation

The processed oat milk thus obtained was subjected to sensory evaluation concerning the pH (25°C) and the aroma-enhancing effect. The results are shown in Table 2.

The aroma-enhancing effect of the processed oat milk was evaluated based on the following evaluation criteria.

$\times$: No change in aroma as compared with the processed oat milk of Comparative Example 1.
$\Delta$: The aroma derived from oat as a raw material is slightly felt as compared with the processed oat milk of Comparative Example 1.
o: The aroma derived from oat as a raw material is strongly felt as compared with the processed oat milk of Comparative Example 1.

[Table 2]

| | Comparative Example | | | | | Example |
|---|---|---|---|---|---|---|
| | 1 | 2 | 3 | 4 | 5 | 1 |
| PG (U/1 g oat protein) | 0 | 5 | 5 | 5 | 5 | 5 |
| E5NC (U/1 g oat) | 1.35 | 1.35 | 1.35 | 1.35 | 1.35 | 1.35 |
| BZ-LC (U/1 g oat) | 0 | 0 | 3 | 0 | 0 | 0 |
| HC90 (U/1 g oat) | 0 | 0 | 0 | 45 | 0 | 0 |
| GLT (GTU/1 g oat) | 0 | 0 | 0 | 0 | 1.5 | 0 |
| BAF (U/1 g oat) | 0 | 0 | 0 | 0 | 0 | 0.33 |
| pH | 6.3 | 6.5 | 6.5 | 6.5 | 6.6 | 6.5 |
| Oat aroma-enhancing effect | $\times$ | $\times$ | $\times$ | $\times$ | $\times$ | $\bigcirc$ |
| 5 U/1 g oat protein corresponds to 0.6 U/1 g oat. | | | | | | |

As is apparent from Table 2, by treating oat milk with a protein deamidase and a $\beta$-amylase, processed oat milk with enhanced aroma derived from oat as a raw material was obtained.

**Claims**

1. A production method for a processed product of a plant protein food and drink material and/or a plant protein food and drink, the production method comprising a step of treating a plant protein food and drink material and/or a plant protein food and drink with a protein deamidase and a $\beta$-amylase.

2. The production method according to claim 1, wherein the plant protein food and drink material and/or the plant protein food and drink is oat milk.

3. The production method according to claim 1, wherein the protein deamidase is used in an amount of 0.05 U or more per 1 g of a plant protein.

4. The production method according to claim 1, wherein the $\beta$-amylase is used in an amount of 0.01 U or more per 1 g of a plant protein raw material.

5. The production method according to claim 1, wherein the $\beta$-amylase is used in an amount of 0.001 U or more per 1 U of the protein deamidase.

6. The production method according to claim 1, further comprising a step of preparing the plant protein food and drink material and/or the plant protein food and drink using 0.5 parts by weight or more of water per 1 part by weight of a plant protein raw material.

**7.** The production method according to any one of claims 1 to 6, wherein an $\alpha$-amylase is used in combination with the protein deamidase and the $\beta$-amylase.

**8.** An aroma enhancer for a plant protein food and drink material and/or a plant protein food and drink, the aroma enhancer comprising a protein deamidase and a $\beta$-amylase.

## INTERNATIONAL SEARCH REPORT

| International application No. |
|---|
| **PCT/JP2021/039923** |

| A. | CLASSIFICATION OF SUBJECT MATTER |
|---|---|

*A23J 3/34*(2006.01)i
FI:   A23J3/34

According to International Patent Classification (IPC) or to both national classification and IPC

| B. | FIELDS SEARCHED |
|---|---|

Minimum documentation searched (classification system followed by classification symbols)

A23J3/34

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2016-506732 A (OATLY AB) 07 March 2016 (2016-03-07) claims, examples | 1-8 |
| X | JP 2009-050226 A (GUNEI KAGAKU KOGYO KK) 12 March 2009 (2009-03-12) claims, examples | 1-8 |
| X | WO 2011/007404 A1 (AMANO ENZYME INC) 20 January 2011 (2011-01-20) claims, paragraphs [0066]-[0074] | 1-8 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **06 December 2021** | **21 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/039923**

| Patent document cited in search report | | | Publication date (day/month/year) | Patent family member(s) | | | Publication date (day/month/year) |
|---|---|---|---|---|---|---|---|
| JP | 2016-506732 | A | 07 March 2016 | US<br>claims, examples<br>WO<br>EP | 2015/0351432<br><br>2014/123466<br>2953482 | A1<br><br>A1<br>A1 | |
| JP | 2009-050226 | A | 12 March 2009 | (Family: none) | | | |
| WO | 2011/007404 | A1 | 20 January 2011 | US<br>claims, paragraphs [0079]-[0087]<br>EP<br>JP | 2012/0121760<br><br><br>2454942<br>2011-36237 | A1<br><br><br>A1<br>A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000050887 A
- JP 2008283900 A
- JP 2015159765 A
- US 6451361 B1
- CN 101991163 A
- JP 2001218590 A
- WO 2006075772 A1